# EUROPEAN PATENT APPLICATION

(11) **EP 2 164 030 A1**
(43) Date of publication of application: **17.03.2010**
(21) Application number: 09179985.8
(22) Date of filing: 29.01.2004
(51) Int. Cl.: G06K 19/07, G06K 19/077, G06K 19/10, A44B 18/00, A44B 19/08, A44B 19/00, A44B 11/25, A44B 1/08, G06K 19/04, A44B 19/26, A44B 19/36, A41D 1/00

(54) **Identification-medium-equipped article, true-false decision on such article, and commodity distribution control method**

(62) Divisional of application: 04706366.4
(71) Applicant: YKK Corporation, Chiyoda-ku, Tokyo 101 8642 (JP)
(72) Inventor: Sugata, Tomonari, Toyama 938-8601 (JP); Sato, Yoshiaki, Toyama 938-8601 (JP)
(74) Representative: Dossmann, Gérard

(57) **Abstract**

A short-range RFID as an identification medium 50 is incorporated into a top end stop 5 of a slide fastener, and antenna connecting terminal 51 connected to the identification medium 50 is exposed in a surface of the top end stop. An antenna line 35a is formed on a film 36, and contact points 35b are formed on both ends of the antenna line 35a wherein an adhesive portion 37 is formed on an end portion of the film 36 excluding the contact points 35b. By attaching the adhesive portion 37 of the film 36 on a top surface of the top end stop 5, the contact points 35b of the antenna line 35a and the antenna connecting terminal 51 are connected respectively. Consequently, the identification medium 50 can be used as a RFID for long-range communication. Then, by peeling off the film 36 from the top end stop 5, the identification medium 50 can be used as a RFID for short-range communication.

## Description

The present invention relates to an article equipped with a fastening product such as a slide fastener, a surface fastener, a snap fastener with tape, a rail-like fastener with engaging rail-like pieces, a buckle, a cord stopper, a belt adjuster, a swivel hook and a snap button, and a true-false decision and commodity distribution control method for the article, and more particularly, to an article in which the fastening product is equipped with a first identification medium for short-range communication or short-range recognition and having a removable second identification medium, and a true-false decision and commodity distribution control method for the article.

The identification medium in the description of the specification and claims is used as a term indicating a medium having a readable and/or writable cord or ID (identification) identification cord. Typical identification media include RFID (radio frequency identification), an additive having identification means, an identification information holding matter containing the additive (for example, plagenom and DNA ink which are registered trademarks), and a character and graphic image in which secrete information having identification means has been buried.

As the RFID, a silicone chip RFID or a crystal chip RFID can be used. The RFID is sometimes called a radio IC or IC tag.

The identification medium for short-range communication in the description of the specification and claims used as a term collectively handling identification media capable of inputting/outputting identification information with a communication range of less than 30 cm, preferably less than around 15 cm, and for example, an RFID having a communication range of 0 to less than around 10 cm is included as the identification medium for short-range communication. The RFID may have an antenna or no antenna.

The identification medium for long-range communication in the description of the specification and claims is used as a term collectively handling identification media capable of inputting/outputting identification information with a communication range of around 10 cm or more, preferably 30 cm or more and less than 5 m, and for example, an RFID having a communication range of around 10 cm or more is included as the identification medium for long-range communication.

The identification medium for short-range recognition in the description may also be used as a term collectively handling characters and graphic images in which the aforementioned identification information holding matter or secrete information having the identification means has been buried.

Examples of the identification information holding matter include an identification medium obtained by mixing a rare earth element in resin etc., or a so-called plagenom (registered trademark) which possesses identification information indicating specific information depending on a kind of the mixed rare earth element, quantity of its addition or the like, and a so-called DNA ink (registered trademark) produced by mixing synthetic DNA produced artificially from part of biological DNA information in ink. The synthetic DNA information mixed in ink can be read out by detection using nuclear magnetism resonance or by optical detection using infrared ray or the like.

The characters and graphic images in which secrete information having the identification means has been buried includes an identification medium incorporating an identification yarn reacting with infrared ray or the like, in which the incorporated identification yarn can be visually recognized by irradiating with infrared ray, and an identification medium having characters, graphic images, and patterns etc. in which characters, graphic images, and patterns etc. can be visually recognized.

In recent years, total commodity distribution control from production and distribution to sales of products, and preventions of loss, theft and forgery of products have been carried out by incorporating an RFID which executes data communication according to a radio communication method in products at a production stage. Use of an RFID by attaching to clothes in order to prevent a dementia patient from prowling has been proposed.

Generally, the RFID used currently is largely classified into three types. A first type is called a passive tag, which includes no battery for starting and stores data. Some types allow stored data to be rewritten. As a power supply for starting the passive tag, an electromotive force is generated with an electromagnetic wave received from an external reading unit, and a generated electromotive force is used as a power supply for the RFID.

A second type is called an active tag, which has a battery for startup and is capable of sending stored data, and some types allow the stored data to be rewritten. A third type is called a semi-passive tag, which has a battery for startup and does not send stored data to an external reading unit until it receives a trigger signal sent from the external reading unit. Some types allow the stored data to be rewritten.

To read data stored in a memory of the RFID by means of the external reading unit, a reception antenna incorporated in the RFID is equipped with a function of receiving a control signal from the reading unit and a function as a coil in case of the passive tag. An electromotive force is generated in the coil as the reception antenna by an electromagnetic wave sent from the external reading unit, so that the RFID is actuated by the electromagnetic force. A type provided with a battery for power supply generates no electromotive force by the reception antenna, and actuates the RFID with the equipped battery.

When the RFID is in a state capable of being actuated, it is possible to fetch necessary data out of the memory in the RFID based on a control signal from the reading unit, and to send the data as response data from a sending antenna to the reading unit. The sent signal as a response is received by the reception antenna of the reading unit, and response data is analyzed in a controller of the reading unit. The response data is sent to a control device such as a personal computer after it is stored temporarily in the reading unit as data stored in the RFID.

Further, data stored in the memory of the RFID can be updated or rewritten based on the control signal sent from the reading unit depending on a performance of the RFID. A variety of security means are taken upon reading and writing data from/to the memory in the RFID.

As a fastening product incorporating this kind of the RFID, there have been proposed, for example, "Pull tab of slide fastener" described in Japanese Patent Application Laid-Open (JP-A) No. 2002-125721 and "Clothes button with shank to be sewed" described in JP-A No. 2002-42100 . As an identification medium using no RFID, "Polymer material capable of identifying a kind, production history and the like and identification method thereof" described in JP-A No. 2002-332414 has been proposed.

Furthermore, EP 1 237 288-A2 discloses a button in which an antenna element and a transponder for data exchange are stored. In addition, EP 1 661 478-A1 which was filed before the filing date of the present application and published after the filing date of the present application, discloses a removable RFID chip attached to a slide fastener, the RFID being connected to an antenna provided on a fastener tape.

Furthermore, WO96/08760-A1 discloses a master electronic tag and a subordinate electronic tag constructed as a single tag for a container and having on the same single tag a long-range antenna and a short-range antenna.

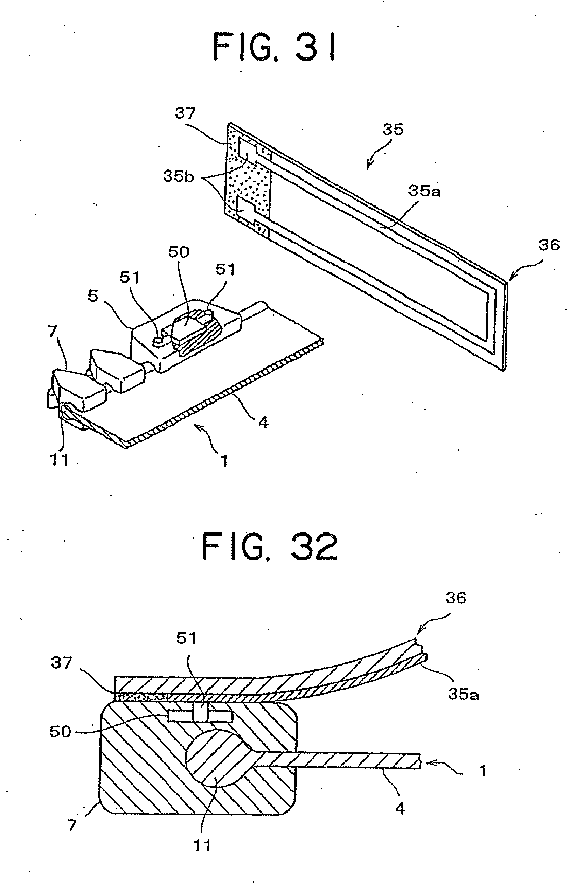

According to a pull tab of a slide fastener described in JP-A No. 2002-125721 , an RFID chip 74 and a coil antenna 73 are buried in a pull-tab main body 71 made of metal, synthetic resin, leather, thick fabric or the like as shown in FIG. 31, and the coil antenna 73 and the RAID chip 74 are sealed in a glass tube 75.

When the pull-tab main body 71 is constructed of a metal material, a burying hole 72 for the glass tube 75 is formed in the pull-tab main body 71, and a sending/receiving slit 76 communicating between inside and outside is formed in a wall face of the burying hole 72, so that signal exchange can be carried out between the coil antenna 73 disposed at a portion corresponding to the sending/receiving slit 76 and a reading unit disposed outside. The pull-tab main body 71 in which the RFID comprising the coil antenna 73 and the RFID chip 74 has been buried is formed by inserting the glass tube 75 containing the coil antenna 73 and the RFID chip 74 into the burying hole 72 and sealing an opening end of the burying hole 72 with epoxy resin.

When the pull-tab main body 71 is constituted of synthetic resin, the pull-tab main body 71 is constituted of a synthetic resin material having electromagnetic permeability. The RFID sealed in the glass tube 75 is sealed in the burying hole 72 with the epoxy resin in a same manner as in the pull-tab main body made of metal, so that the pull-tab main body 71 having the RFID buried therein is formed.

Furthermore, when the pull-tab main body 71 is constituted of leather or fabric, a burying space in which the glass tube 75 is to be inserted is formed in the pull-tab main body 71. The RFID comprising the coil antenna 73 and the RFID chip 74 sealed in the glass tube 75 is covered with a metal tube having a long hole for sending/receiving for reinforcement. The reinforced RFID is accommodated such that it is hidden in the burying space.

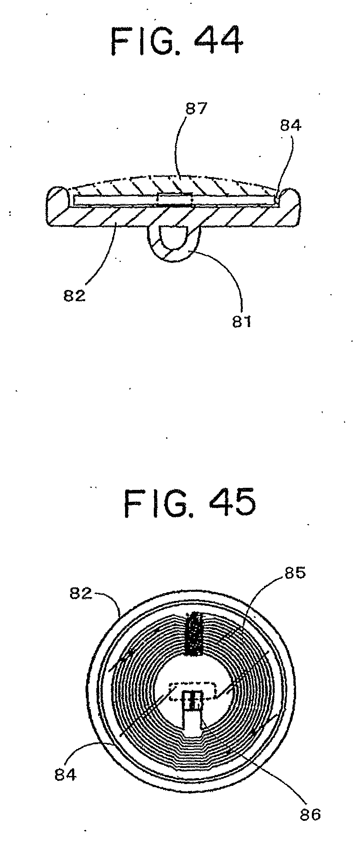

The clothes button with shank to be sewed described in JP-A No. 2002-42100 is constituted of a button main body 82 made of hard resin having electromagnetic permeability as shown in FIG. 44. A ring-like concave portion 84 is formed in a surface of the button main body 82, and a shank 84 for sewing the button onto clothes or the like is provided integrally on a rear surface of the button main body 82 so as to be protruded.

As shown in FIG. 45, an RFID chip 86 is disposed in a center of the concave portion 84, and a spiral-like coil antenna 85 electrically connected to the RFID chip 86 is disposed such that it winds about in the concave portion 84. After the RFID comprising the RFID chip 86 and the coil antenna 85 is disposed in the concave portion 84, epoxy resin 87 is poured into the concave portion 84 and hardens so that the RFID comprising the coil antenna 85 and the RFID chip 86 is waterproofed, thereby producing a button incorporating the RFID.

According to the polymer material and identification method thereof described in JP-A No. 2002-332414, one or two or more elements or its compound is contained in a polymer material of an identification object as information presenting material. Numerical data of one digit or plural digits corresponding to a kind or content of the information presenting material is used as information relating to a polymer material of an identification object containing the information presenting material. Thus, it comes that the numerical data of one digit or plural digits has bar-code-like information, so that a variety of information can be contained in the polymer material.

Because the RFIDs disclosed in JP-A NOs. 2002-125721 and 2002-42100 are short-range communication RFIDs, data stored in the RFID can be read only in a small area having a small distance between the RFID and the reading unit. If it is intended to execute commodity distribution control about clothes or bag etc. equipped with a slide fastener or a button incorporating the RFID with data stored in the memory of the RFID incorporated in the slide fastener or button, data for commodity distribution control in addition to data about product information of the slide fastener or button incorporating the RFID needs to be stored in the memory of the RFID.

In addition, the transponder disclosed in EP 1 237 288-A2, the RFID disclosed in EP 1 661 478-A1 and the master electronic tag and the subordinate electronic tag disclosed in WO96/08760-A1 are not specified either for true-false decision or commodity distribution control and thus, it is not possible to remove the only one storing the data for commodity distribution control. Specifically, since the master electronic tag and the subordinate electronic tag disclosed by WO96/07760-A1 are attached to the container, not to an article such as a clothing or a bag, there is no need to keep the data for true-false decision or commodity distribution control.

Because the RFID is always mounted on a product such as clothes or bag, a third person can steal information stored in the RFID from an end user who bought such clothes or bag equipped with the RFID through malice. Thus, information relating to individual privacy such as history of an article equipped with the RFID possessed by the end user and individual information of the end user, for example, price of the possessed article, where the article was bought, what kind of product the end user wants to purchase at which shop, leaks out freely.

Particularly, an application field of the fastening product such as a slide fastener has been expanding, so that it has been widely used from bags to clothes and its usage styles vary. Thus, storage of commodity distribution information relating to an article equipped with a fastening product containing the RFID which allows such a fastening product to be illegally accessed does not meet consumer's needs, and is not preferable from viewpoints of protection of individual privacy and the like.

As regards true-false decision after an article equipped with a fastening product containing the RFID or an identification medium for short-range recognition is transferred to end user, the RFID does not need to dispatch a corresponding signal until a reading unit sends a signal thereto and the RFID does not need to always dispatch any signal over a receivable distance. However, a wave dispatched from the RFID is demanded to be received by the reading unit stably within a predetermined range in commodity distribution control at manufacturing, wholesaler and sales stages.

Thus, a long-range communication RFID needs to be used for true-false decision and commodity distribution control. However, it is difficult to provide the long-range communication RFID on any fastening product, and mounting the long-range communication RFID on an article permits illegal access, which is a problem to be solved.

The present invention has been made to solve these problems. A first possibility which is outside of the claims to solve the above-described problems is to allow an identification medium for true-false decision of an article and a fastening product and an identification medium for commodity distribution control of an article to be used under different conditions. Another possibility is to reuse a removed identification medium by attaching it to another new article after it is removed from a previous article.

Consequently, true-false decision and commodity distribution control on an article can be executed with individual identification media by using an identification medium attached to the article and an identification medium detachable from the article, thereby achieving total commodity distribution control on the articles.

A first basic configuration not covered by the claims is characterized by mounting a first identification medium for short-range communication or short-range recognition on an article, and further mounting a second identification medium removably on the article.

Consequently, the article can be equipped with the first identification medium which is always attached thereto and the second identification medium which is detachable, so that the identification media can be used for different purposes, for example, the first identification medium is used for true-false decision while the second identification medium is used for commodity distribution control. Further, necessary control information or decision information can be left on an article after the article is sold, and unnecessary control information or decision information can be removed from the article. Accordingly, secrete information or the like about the article can be prevented from leaking out.

Further, the first identification medium may be provided to a fastening product intended to be attached to an article, so that control of a fastening product and control of an article equipped with the fastening product can be carried out with the first identification medium. The second identification medium may be allowed to execute control of an article equipped with the fastening product such as commodity distribution information relating to the article separately from the first identification medium.

Further, the second identification medium can be arbitrarily removed form the article, so that identification information to be added to the fastening product or article can be borne by the first identification medium and the second identification medium separately. In addition, information which is problematic on security such as individual information and commodity distribution information can be stored in the second identification medium which can be arbitrarily removed.

The first identification medium can be used as an identification medium for true-false decision on the fastening product or article, and the second identification medium can be used as an identification medium for commodity distribution control. As a consequence, the identification medium for commodity distribution control can be removed from the article when commodity distribution control necessary for the identification medium ends, and the removed identification medium for commodity distribution control can be reused as an identification medium for commodity distribution control for another new article.

Because the identification medium for true-false decision is attached to the article as it is, it can be used as a decision means for deciding whether the article is true or false when an end user requests the article to be repaired or at article inspection by customs. The true-false decision can be carried out by comparing data stored in the first identification medium with reference data set preliminarily for true-false decision.

As the first identification medium, an identification medium for short-range communication or an identification medium for short-range recognition can be used. As the identification medium for short-range communication, an RFID or the like having a communication range of 0 to around 15 cm can be used. As the identification medium for short-range recognition, an identification medium whose specific identification information can be read visually or with a dedicated detection unit may be used.

Examples of the identification medium for short-range recognition include: an identification medium in which a special fluorescent material is added to a material such as plastic upon tinting in an invisible form to indicate specific information, or a so-called plagenom (registered trademark) which allows its specific information to be read with a dedicated reading unit as required; an identification medium in which ink mixed with synthetic DNA produced artificially from part of biological DNA information is printed to allow the synthetic DNA information mixed in the ink to be read by detection using nuclear magnetism resonance or optical detection using infrared ray or the like; an identification medium incorporating an identification yarn reacting with infrared ray or the like so as to allow the identification yarn incorporated in the medium to be visually recognized by irradiating infrared ray or the like; and an identification medium provided with a character, graphic image or pattern which can be visually recognized.

As the second identification medium, an identification medium for short-range communication or an identification medium for long-range communication can be used. As the identification medium for short-range communication, an RFID having a communication range of 0 to around 10 cm can be used, and as the identification medium for long-range communication, an RFID having a communication range of around 10 cm or more can be used.

If the short-range communication RFID is used as the first identification medium and the second identification medium, it is preferable to make difference between the communication frequencies of the first identification medium RFID and the second identification medium RFID.

If the short-range communication RFID is used as the first identification medium and the long-range communication RFID is used as the second identification medium, data stored in the first identification medium can be sent to an external reading unit through the second identification medium or data sent from the external reading unit can be stored in the first identification medium by provided a configuration in which signals can be sent/received between the first identification medium and the second identification medium. As a consequence, an identification medium capable of satisfying various demands can be provided.

The second identification medium can be removably attached to a fastening product mounted on an article. Particularly, if the fastening product is a slide fastener, the second identification medium can be removably attached to a pull tab of the slider fastener. If the second identification medium is removably attached to the pull tab, the second identification medium can be disposed on a ribbon-like tape, a surface fastener or the like which can be removably attached to the pull tab.

The second identification medium can be disposed on a tag which can be removably attached to an article. In this case, if a mark or the like indicating that the second identification medium is mounted is provided on a surface of the tag, the tag can be reused by removing the tag having the second identification medium mounted thereon when the article is sold to a consumer and by returning the removed tag to a manufacturer of the article or the like. When the tag is reused, it is preferable to delete data stored in the second identification medium and to write new data before reuse.

The second basic configuration which corresponds to the present invention as claimed is **characterized in that** a short-range communication RFID is provided to the article as the first identification medium, and the RFID has an antenna connecting terminal to which an antenna for long range communication can be connected while the antenna for long range communication is removably connected to the antenna connecting terminal.

The short-range communication RFID can be used as a long-range communication RFID by connecting the long-range communication antenna. In a state in which the long-range communication antenna is connected, the RFID can be used as a commodity distribution control RFID, and in a state in which the long-range communication antenna is removed, it can be used as an RFID for true-false decision.

Further, the long-range communication antenna can be constructed by being printed on a film or the like with conductive paint or by placing wire on a surface of a surface fastener, and an antenna having a desired antenna length can be formed easily depending on a communication range.

The antenna connecting terminal of the RFID to be connected to the long-range communication antenna can be formed on the article or the fastening product attached to the article, and it can be formed at any desired portion if the portion allows the antenna connecting terminal to be formed. Means for removably attaching a member equipped with the long-range communication antenna to the article or the fastening product includes: attachment with an adhesive; attachment with a magnetic force; attachment by nipping with a clip or the like; and attachment by inserting a member equipped with the antenna into a portion in which the antenna connecting terminal has been formed. When attaching the antenna, it is preferable to attach it taking care such that the antenna is not connected to itself.

According to the invention, a battery for power supply can be removably connected to the RFID. If the first identification medium RFID is an active type or semi-passive type, the battery does not need to be connected, but a communication range for long-distance communication can be further extended by connecting the battery to them.

Consequently, communication with an external reading unit in a wide area and communication between an article stored in a cardboard box and an external reading unit can be executed by attaching the long-range communication antenna to an article equipped with the short-range communication RFID.

Another configuration outside of the scope of the present invention is characterized by a true-false decision and commodity distribution control method which is carried out by providing a first identification medium for short-range communication or short-range recognition on an article, and removably attaching a second identification medium to the article to execute commodity distribution control on the article with data stored in the second identification medium or by storing desired data in the second identification medium.

The data stored or data to be stored in the second identification medium can be used as data for executing commodity distribution control with just the data. Commodity distribution control on an article or a fastening product can be also carried out in such a manner that commodity distribution control information corresponding to the data stored or to be stored in the second identification medium is memorized in an external memory of a personal computer or the like, and data read out from the second identification medium or data stored in the second identification medium is matched with information memorized in the personal computer. A large amount of data which cannot be stored in the second identification medium can be handled by memorizing the information in a personal computer or the like.

Data stored in the first identification medium can be used as data for use in executing true-false decision on the fastening product or the article with just the data. True-false decision on an article or a fastening product can be also carried out in such a manner that true-false decision information corresponding to the data stored in the first identification medium is stored in an external memory of a personal computer or the like, and data read out from the first identification medium is matched with information stored in the personal computer. A large amount of data which cannot be stored in the first identification medium can be handled by memorizing the information in a personal computer or the like.

After a function of the second identification medium for commodity distribution control ends, the second identification medium can be reused as a commodity distribution control identification medium for a new article by removing it from a previous article, and then attaching it to the new article, thereby achieving reuse of resource of the identification medium. When the identification medium is reused, it is preferable to delete existing data stored in the identification medium and to store new data in the identification medium to be reused.

Still another configuration outside of the scope of the present invention is characterized by a true-false decision and commodity distribution control method which is carried out by providing an RFID for short-range communication on an article as a first identification medium, providing on the RFID an antenna connecting terminal to which a long-range communication antenna can be connected, and removably connecting the long-range communication antenna to the antenna connecting terminal so as to carry out the commodity distribution control with data stored in the first identification medium or by storing desired data in the first identification medium.

Consequently, the short-range communication RFID can be used as a long-range communication RFID. Thus, even if the long-range communication RFID is not used, one RFID can be used as the long-range communication RFID or as the short-range communication RFID by only connecting or removing the long-range communication antenna to the RFID.

As for data stored or to be stored in the short-range communication RFID as the first identification medium, data stored or to be stored in the RFID can be used as commodity distribution control data as it is by connecting the long-range communication antenna to the antenna connecting terminal of the RFID as the first identification medium.

Further, commodity distribution control on an article or a fastening product can be carried out in such a manner that commodity distribution control information corresponding to the data stored or to be stored in the first identification medium is memorized in an external memory of a personal computer or the like, and data read out from the first identification medium is matched with information memorized in the personal computer.

A large amount of data which cannot be stored in the first identification medium can be handled by memorizing the information in a personal computer or the like. Moreover, even if data quantity for commodity distribution control increases, commodity distribution control can be carried out without increasing a memory capacity of the first identification medium by recording the increased data into a memory unit of a personal computer or the like, thereby eliminating the necessity of enlarging a size of the RFID.

The long-range communication antenna after removed can be used as an antenna for long-range communication for anther new article, so that the long-range communication antenna can be reused.

### Brief Description of the Drawings

FIG. 1 is a front view of a slide fastener according to one embodiment of the present invention.
FIG. 2 is a front view of major portions of an article equipped with a slide fastener.
FIG. 3 is a partially broken perspective view of a top stop incorporating a first identification medium.
FIG. 4 is a partial front view of a box body incorporating the first identification medium.
FIG. 5 is a partial front view of a bottom stop incorporating the first identification medium.
FIG. 6 is a partial front view of a fastener element incorporating the first identification medium.
FIG. 7 is a partial sectional view of a slider incorporating the first identification medium.
FIG. 8 is a partial sectional view of a pull tab incorporating the first identification medium.
FIG. 9 is a front view of major portions of an article equipped with a slide fastener.
FIG. 10 is a partial sectional view of a fastener tape in which the first identification medium is disposed.
FIG. 11 is a partial sectional view showing a modification of the fastener tape in which the first identification medium is disposed.
FIG. 12 is a partial front view of a reinforcement tape in which the first identification medium is disposed.
FIG. 13 is a sectional view of major portions of FIG. 12.
FIG. 14 is a partial perspective view of a pull tab in which the first identification medium is disposed.
FIG. 15 is a partial sectional view showing a modification of the pull tab in which the first identification medium is disposed.
FIG. 16 is a front view of an article equipped with a slide fastener.
FIG. 17 is a front view showing amodification of the article equipped with a slide fastener.
FIG. 18 is a front view showing another modification of the article equipped with a slide fastener.
FIG. 19 is a partial front view of a buckle in which the first identification medium is disposed.
FIG. 20 is a partial perspective view of a belt adjuster in which the first identification medium is disposed.
FIG. 21 is a partial perspective view of a swivel hook in which the first identification medium is disposed.
FIG. 22 is a partial perspective view of a cord stopper in which the first identification medium is disposed.
FIG. 23 is a partial perspective view of a snap button in which the first identification medium is disposed.
FIG. 24 is a partial perspective view of a button in which the first identification medium is disposed.
FIG. 25 is a partial perspective view of a surface fastener in which the first identification medium is disposed.
FIG. 26 is a sectional view of major portions of FIG. 25.
FIG. 27 is a partial perspective view of a snap fastener in which the first identification medium is disposed.
FIG. 28 is a sectional view of major portions of FIG. 27.
FIG. 29 is a partial perspective view of a rail fastener in which the first identification medium is disposed.
FIG. 30 is a sectional view of major portions of FIG. 29.
FIG. 31 is a partial perspective view of a slide fastener in which a removable antenna is disposed on the first identification medium according to the present invention.
FIG. 32 is a sectional view of major portions of FIG. 31.
FIG. 33 is a perspective view showing a modification of a film in which an antenna is formed according to the present invention.
FIG. 34 is a partial perspective view in which a removable antenna is a pull tab cover disposed to the first identification medium, according to the invention.
FIG. 35 is a sectional view of major portions of FIG. 34.
FIG. 36 is a partial perspective view of a modification in which a removable antenna is a pull tab cover disposed to the first identification medium according to the invention.
FIG. 37 is a partial perspective view of a modification in which a removable antenna is attached to a pull tab disposed to the first identification medium according to the invention.
FIG. 38 is a partial perspective view of a surface fastener equipped with a removable antenna according to the invention.
FIG. 39 is an enlarged view of major portions of a tape in which an antenna is woven according to the invention.
FIG. 40 is an enlarged view of major portions of a modification of the tape in which an antenna is woven according to the invention.
FIG. 41 is an enlarged view of major portions of a tape in which an antenna is knitted according to the invention.
FIG. 42 is a partial perspective view of a buckle in which a removable antenna is disposed in a dummy male member according to the invention.

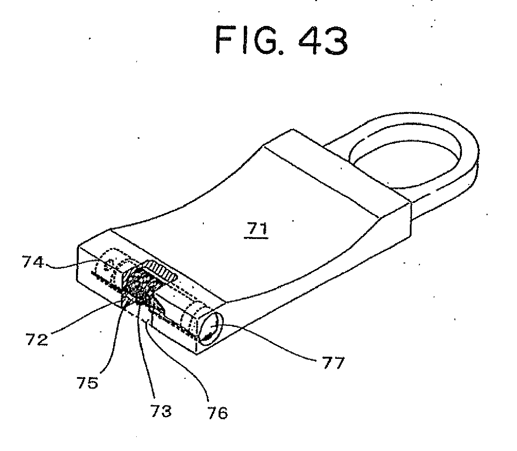

FIG. 43 is a view showing a conventional example using an RFID as a pull tab.
FIG. 44 is a sectional view showing another conventional example using the RFID as a button.
FIG. 45 is a plan view of the conventional example shown in FIG. 44.

Preferred embodiments of the present invention will be described in detail with reference to the accompanying drawings. Other shape and arrangement than those described below may be adopted as long as they are capable of achieving the object of the present invention. Thus, the present invention is not restricted to embodiments described below but may be modified in various ways.

Fastening products of the present invention include, for example, a slide fastener, a surface fastener, a snap fastener, a rail fastener, a buckle, a cord stopper, a belt adjuster, a swivel hook, a snap button, and a button. Articles capable of being equipped with the above-mentioned fastening products include, for example, bags, sportswear, other clothing, shoes and the like.

According to a typical embodiment of an RFID which is applied to the present invention, an RFID chip having a memory for storing data such as identification information of an identification object and an antenna are electrically connected to form a response circuit. As the response circuit, the RFID chip incorporates, for example, a detection circuit, a power supply circuit, a control circuit, a memory circuit, a modulation circuit, and an oscillation circuit.

Further, the present invention includes a battery-less passive tag for supplying electricity to each circuit by electromagnetic induction from outside, an active tag incorporating a battery as a power supply, and a semi-passive tag. The RFID chip includes a silicone chip and a crystal chip.

The RFID chip of the present invention includes types executing a variety of control systems such as: a type which fetches out data stored in a memory in the RFIC chip based on a signal transmitted from a reading unit and sends the data to the reading unit as a response signal; a type which can rewrite or update data or program stored in a memory within the RFID chip based on a signal transmitted from a reading unit; a type in which a control unit in the RFID chip can automatically send data stored in a memory to a reading unit based on a program or the like.

In following embodiments, a case of using a first identification medium for true-false decision and a second identification medium for commodity distribution control will be explained. However, the first identification medium is not limited to a use for true-false decision and the second identification medium is not limited to a use for commodity distribution control, and the first identification medium and the second identification medium may be used in a variety of fields.

### [First embodiment] (not within the scope of the claims)

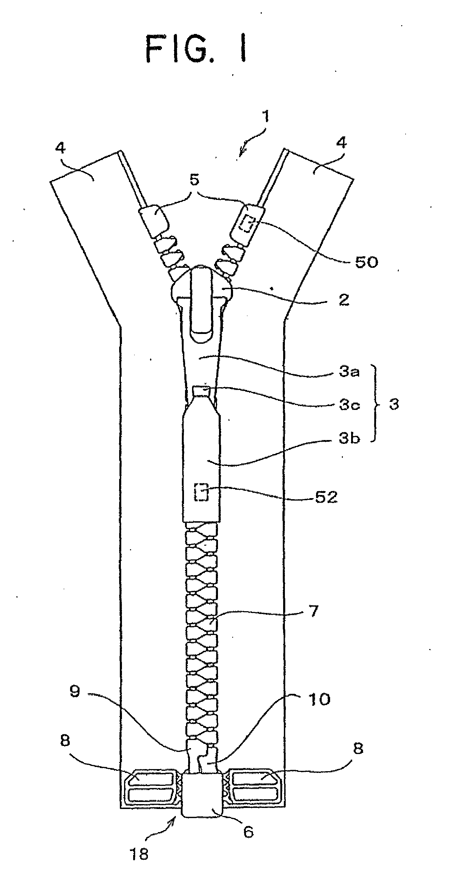

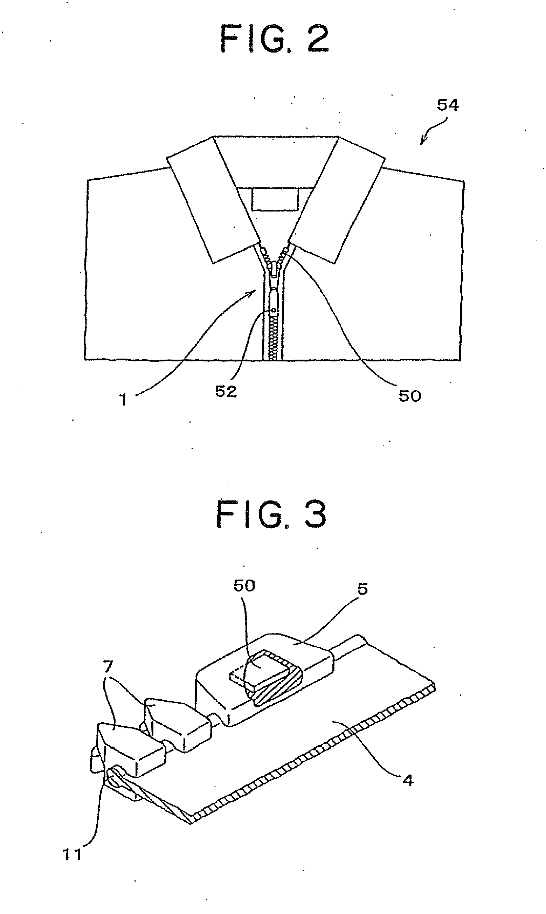

FIG. 1 is a front view of a slide fastener equipped with two identification media, that is, a first identification medium and a second identification medium in a first embodiment of the present invention. FIG. 2 is a front view of major portions of an article, namely, clothes equipped with the slide fastener shown in FIG. 1. FIGS. 3 to 15 are views showing arrangement examples of the first identification medium in the slide fastener.

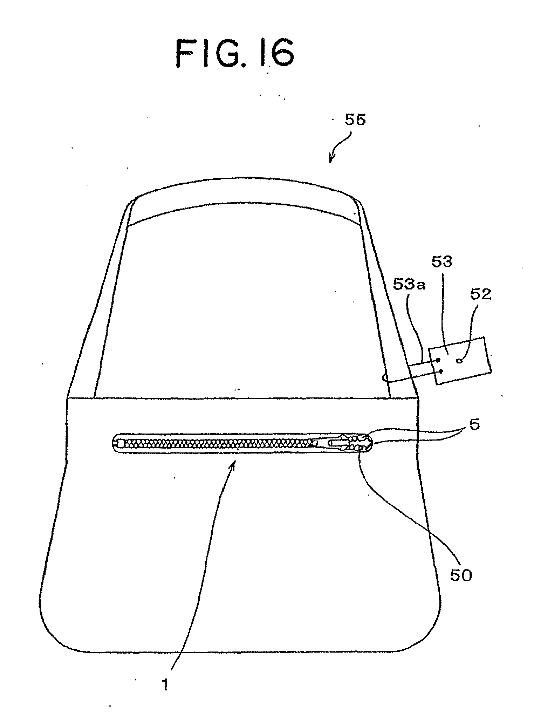

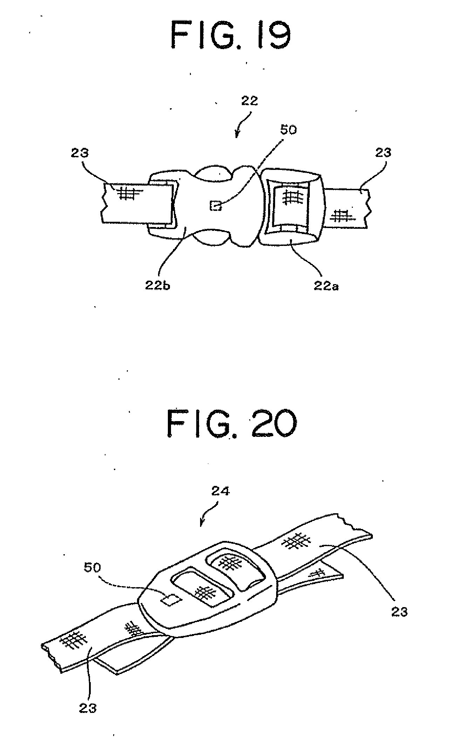

FIGS. 16 to 18 are views showing examples in which the first identification medium is mounted on an article (a bag in this case) while the second identification medium is attached to the article removably. FIGS. 19 to 30 are views showing examples in which the first identification medium is disposed in a fastening product other than the slide fastener.

In FIG. 1, reference numeral 1 denotes a slide fastener to be mounted on an article (not shown) such as clothes or a bag by sewing. A slider 2, a pull tab 3, a top stop 5, a box body 6, a plurality of fastener elements 7, a reinforcement piece 8, an insert pin 9, a box pin 10 and the like are attached to a fastener tape 4.

The fastener tape is constituted of a fiber tape-like base fabric produced by weaving or knitting, for example, synthetic resin fibers, an unwoven fabric or a synthetic resin sheet. Each of the fastener elements is constituted of a synthetic resin or metal element which sandwiches front and rear faces at a side edge of the fastener tape. The fastener element may be also constituted of a continuous element such as a coil-like element produced by winding the synthetic resin monofilament into a coil-like shape and a zigzag-like element produced by continuously forming portions bent in a U-like shape in a lateral direction on a plane alternately up and down along a longitudinal direction. A same thing can be said of the above-mentioned slider, top and bottom stops, a reinforcement sheet-like member and a releasable bottom end stop, and their sizes, materials and structures may be changed.

The top stop 5 incorporates an RFID for short-range communication as a first identification medium 50. A second pull-tab member 3b is removably attached to a first pull-tab member 3a of the slider 2 through a hole 3c of the first pull tab, and the second pull-tab member 3b is equipped with an RFID as a second identification medium 52.

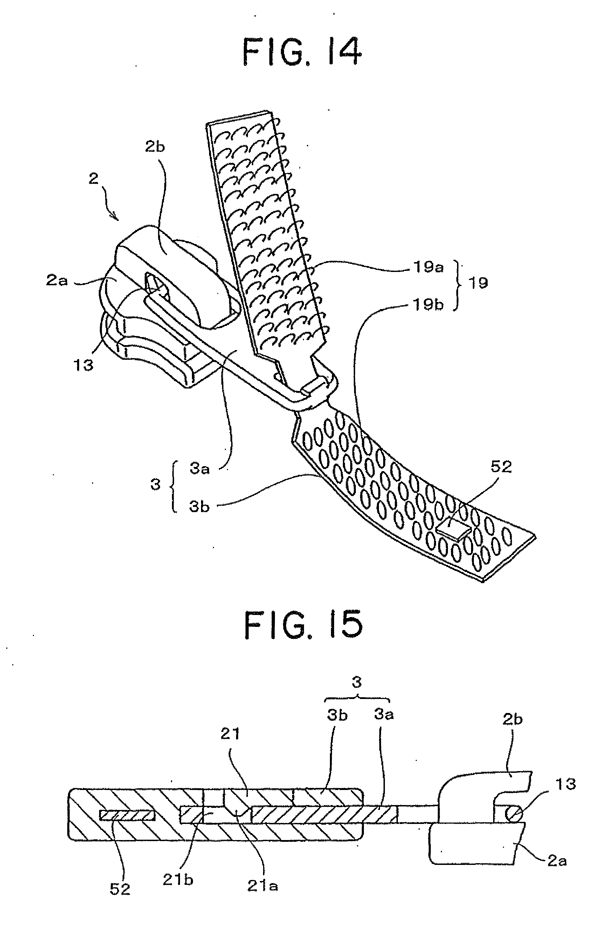

The second pull-tab member 3b may be constructed as a surface fastener 19 comprising a male engaging element 19a and a female engaging element 19b as shown in FIG. 14, and the second identification medium 52 may be sandwiched between the male engaging element 19a and the female engaging element 19. The second pull-tab member 3b may be formed of a ribbon or the like while the second identification medium is attached to the same ribbon with appropriate means such as an adhesive agent, a snap button and a surface fastener, and may be attached to the first pull-tab member 3a with an appropriate attaching means by inserting an end portion of the same ribbon into the hole 3c in the first pull-tab member 3a.

Although an example of using a long-range communication RFID as the second identification medium 52 will be explained in the following description, the RFID as the second identification medium 52 may be a short-range communication RFID or a long-range communication RFID. When the short-range communication RFID is used as the second identification medium 52, it is preferable to use different frequencies for the frequency of the short-range communication RFID as the first identification medium 50 and the frequency of the short-range communication RFID as the second identification medium 52 to avoid a malfunction.

As shown in FIG. 2, an article 54 can be provided with the first identification medium 50 for true-false decision and the second identification medium 52 for commodity distribution control by attaching the slide fastener 1 incorporating the first identification medium 50 and removably equipped with the second identification medium 52 to the article 54. Additionally, the second identification medium 52 can be removed from a first pull-tab member 3a of the slider 2 when commodity distribution control on the article 54 ends because the second identification medium 52 is removable. The removed second identification medium 52 can be attached to a pull tab of the slider 2 mounted on another new product to achieve reuse of the second identification medium.

Because the second identification medium can be removed when commodity distribution control on the article ends, history of an article carried by an end user never leaks out even if he or she carries the article in streets, so that he or she can carry it without worrying about anything.

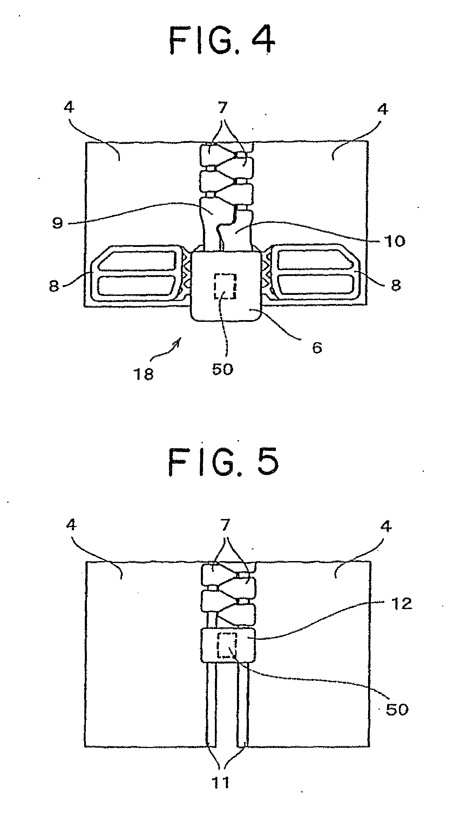

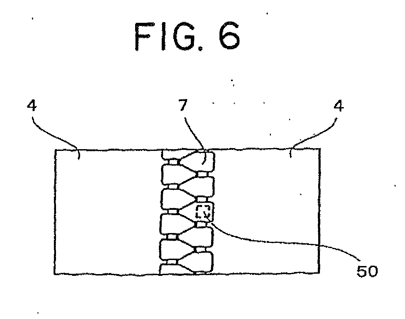

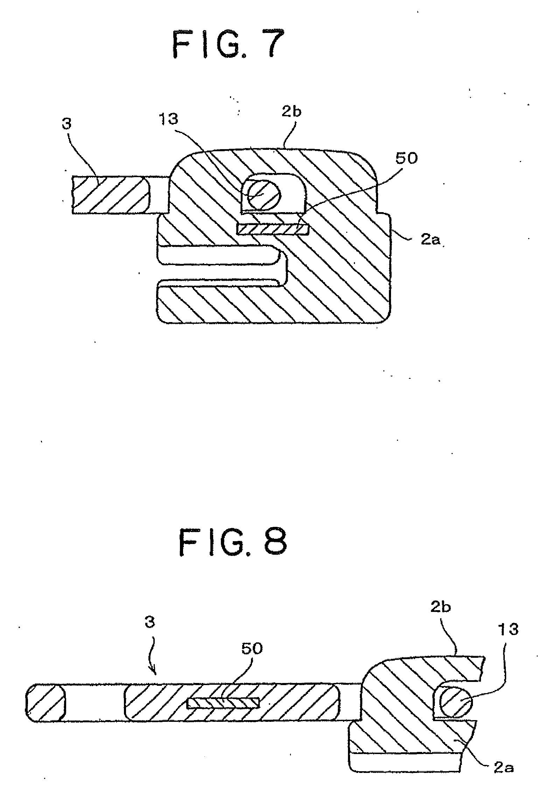

FIG. 3 is a partially broken view showing a state in which the first identification medium 50 is incorporated in the top stop 5, and FIG. 4 shows a state in which the first identification medium 50 is incorporated in the box body 6. FIG. 5 shows a state in which the first identification medium 50 is incorporated in the bottom stop 12, and FIG. 6 shows a state in which the first identification medium is incorporated in the fastener element 7. FIG. 7 shows a state in which the first identification medium 50 is incorporated in a slider body 2a, and FIG. 8 shows a state in which the first identification medium 50 is incorporated in the pull tab 3 of the slider 2. In the states shown in FIGS. 3 to 8, it is preferable that respective members incorporating the first identification medium 50 are formed of a nonconductive or non-electromagnetic material for transmission and reception of a signal between the first identification medium 50 and an external reading unit.

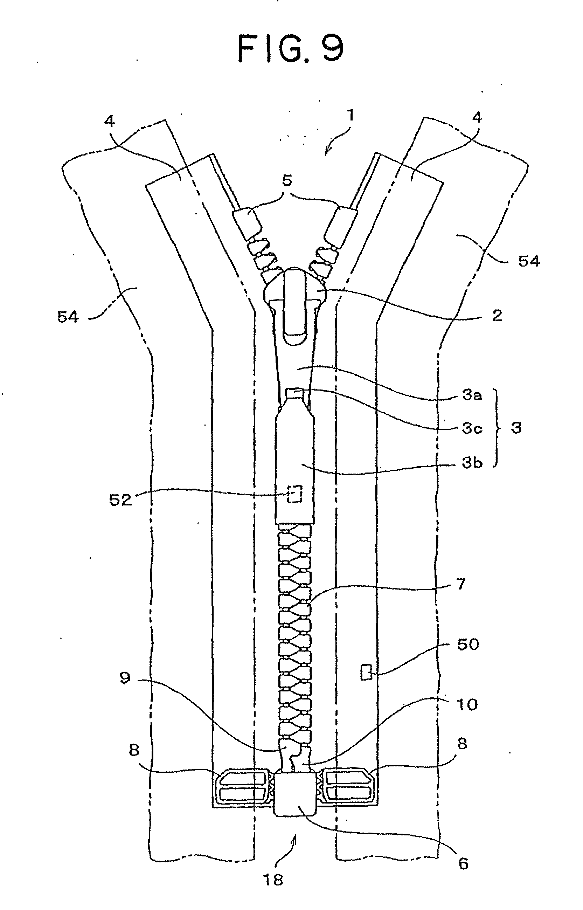

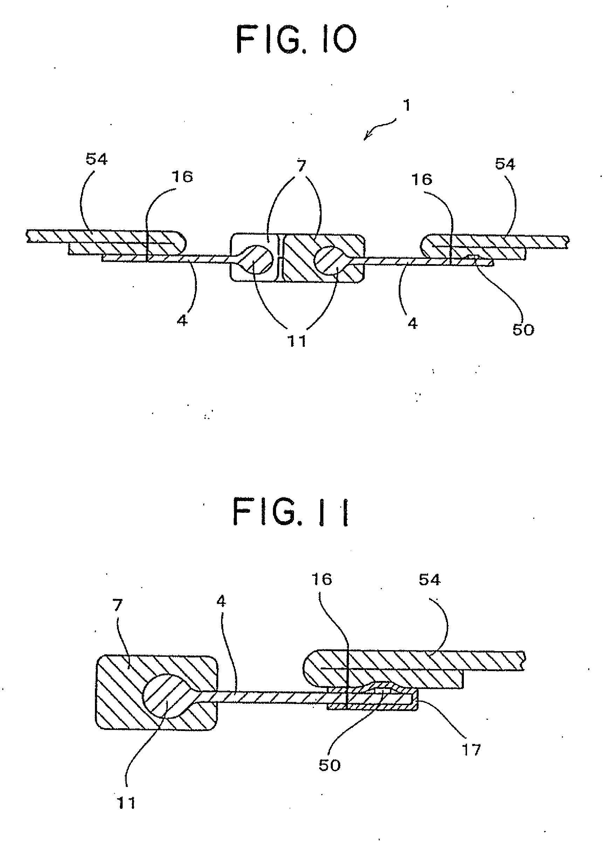

FIG. 9 shows an example in which the first identification medium 50 is disposed in the fastener tape 4 of the slide fastener 1. A portion on the fastener tape 4 in which the first identification medium 50 is to be disposed is preferred to be a portion near a side edge of the fastener tape 4 which is covered with the article 54 when the slide fastener 1 is attached to the article 54 as shown in FIGS. 10 and 11. After at least a surrounding of the first identification medium is covered with a tape member 17, the slide fastener 1 may be attached to the article 54, as shown in FIG. 11. The first identification medium 50 can be protected by using the tape member 17, and even if the article 54 is washed or the like, using a waterproof tape as the tape member 17 blocks water from entering the RFID which is the first identification medium.

The first identification medium 50 can be fixed on the slide fastener 1 by using a tape member whose one side is coated with an adhesive, and thus, it is possible to prevent the first identification medium 50 from moving between the slide fastener 1 and the article 54 after the slide fastener 1 is attached to the article. A position for reading desired data from the first identification medium 50 is specified if an attachment position of the first identification medium 50 is fixed.

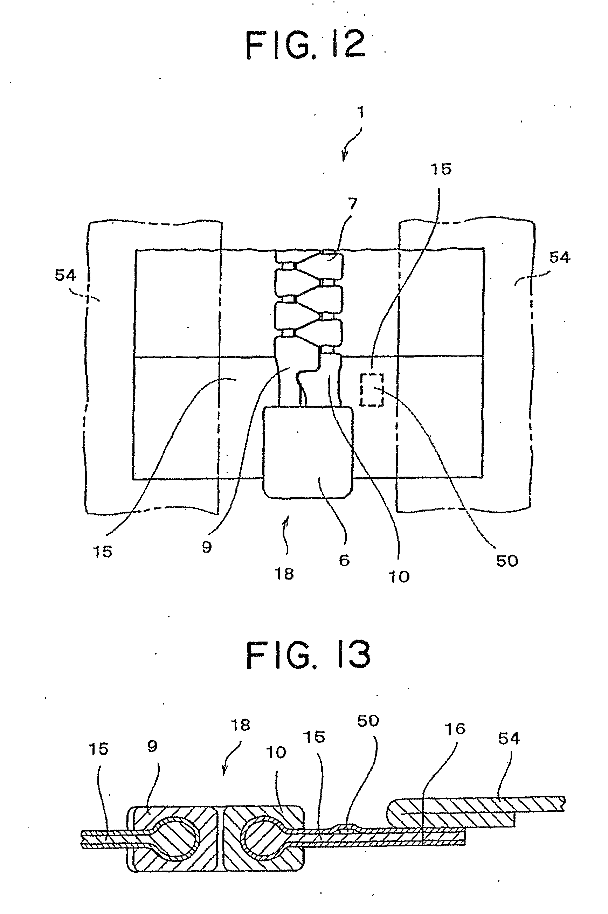

FIG. 12 shows a state in which the first identification medium 50 is disposed on the reinforcement tape 15 of the slide fastener 1, and as shown by a lateral sectional view of FIG. 12 in FIG. 13, the first identification medium 50 can be accommodated in the reinforcement tape 15.

The first identification medium 50 is disposed at a specified position of the slide fastener 1 as described above, whereby, even when data stored in the first identification medium is read with an external reading unit, true-false decision with the first identification medium can be carried out rapidly without letting its reading position known by a third person.

FIGS. 14 and 15 show an example in which the second identification medium is removably mounted on the pull tab 3 of the slide fastener 1, that is, an example in which the second pull-tab member 3b equipped with the second identification medium 52 is removably mounted to the first pull-tab member 3a. FIG. 14 shows a state in which the second identification medium 52 is disposed on a surface fastener 19 having a male engaging element 19a and a female engaging element 19b on an identical face and the surface fastener 19 is inserted into the hole 3c of the first pull-tab member 3a. Consequently, by engaging the male engaging element 19a with the female engaging element 19b, the second identification medium 52 disposed between them can be mounted removably to the slider 2.

As shown in FIG. 15, a hole 21b in which the first pull-tab member 3a can be inserted and an elastic piece 21 having an engaging portion 21a projecting into the hole 21b at one end thereof are formed in the second pull-tab member 3b. The second pull-tab member 3b contains the second identification medium 52. If the first pull-tab member 3a is inserted into the hole 21b of the second pull-tab member 3b, the engaging portion 21a of the elastic piece 21 engages the hole 3c in the first pull-tab member 3a, so that the second pull-tab member 3b can be mounted removably to the first pull-tab member 3a.

FIG. 16 shows an example of using a bag as an article 55. The first identification medium is incorporated in the top stop 5 of the slide fastener 1 attached to the article 55. A tag 53 equipped with the second identification medium 52 is attached removably to the bag through a string 53a. The first identification medium 50 is used for true-false decision on the slide fastener and the bag as the article 55, and the second identification medium 52 provided on the tag 53 may be used for commodity distribution control on the article 55.

If the commodity distribution control on the article 52 based on the second identification medium 52 is ended, the tag 53 may be removed from the bag and reused for another article for example, another bag. When the second identification medium 52 is reused, it is favorable to delete data stored in the second identification medium 52.

Commodity distribution control on the article can be carried out from a far place by using the second identification medium 52 capable of long-distance communication, and true-false decision on the article 55 can be executed by using the first identification medium 50 after the tag 53 equipped with the second identification medium 52 is removed. In the meantime, the true-false decision with the first identification medium 50 can be carried out not only after the second identification medium 52 is removed, but also in a state in which the second identification medium 52 is attached to the article 55.

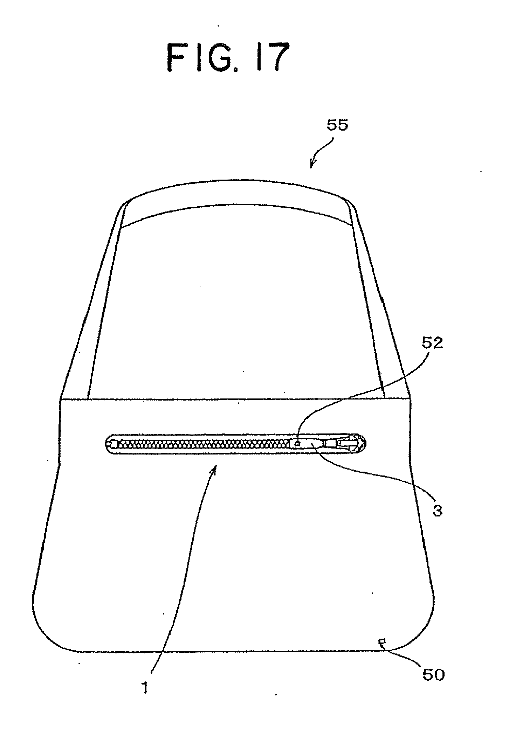

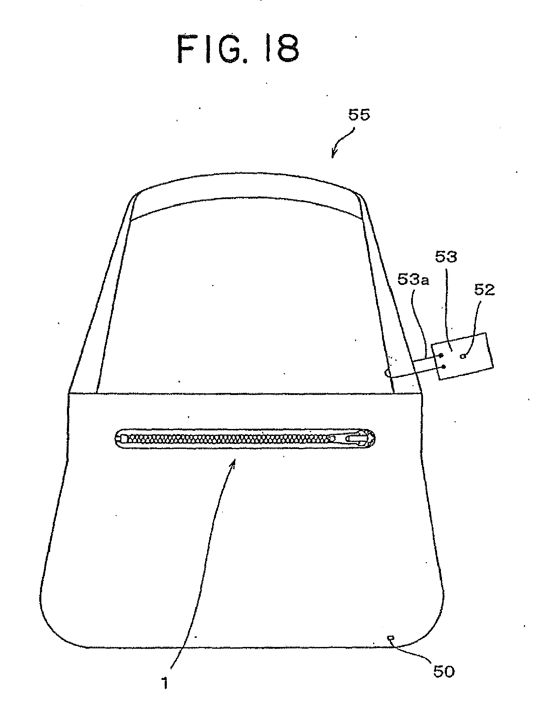

FIGS. 17 and 18 show examples of using a bag as the article 55 like FIG. 16. In FIGS. 17 and 18, the first identification medium 50 is disposed at a desired position of the bag as the article 55 such that it is easy to be seen from outside. The first identification medium 50 may be disposed as part of a pattern in the bag or may be disposed such that it is hidden on a rear side of the bag or the like.

In FIG. 17, the second identification medium 52 is removably attached to the pull tab 3 of the slider 2, and in FIG. 18, the second identification medium 52 is disposed in the tag 53 and the tag 53 is removably attached to the bag through the string 53a.

In the examples shown in FIGS. 17 and 18, commodity distribution control on the article can be carried out from a far place by using the second identification medium capable of long-distance communication, and the true-false decision on the article 55 can be executed by using the first identification medium 50 after the tag 53 equipped with the second identification medium 52 is removed. In the meantime, the true-false decision with the first identification medium 50 can be carried out not only after the second identification medium 52 is removed, but also in a state in which the second identification medium 52 is attached to the article 55.

FIG. 19 shows an example in which the first identification medium 50 is incorporated in a female member 22b of a buckle 22. The first identification member 50 may be incorporated in a male member 22a instead of being incorporated in the female member 22b of the buckle 22 or disposed in a belt 23. The first identification member may be attached to the male member 22a or the female member 22b with an appropriate attaching means such as adhesion instead of being incorporated in the male member 22a or the female member 22b of the buckle 22.

If the buckle 22 and the belt 23 are handled as one article, it is permissible to attach a tag equipped with the second identification medium to the belt or the like. Consequently, commodity distribution control on the belt and true-false decision on the belt and the buckle can be executed.

FIG. 20 shows an example in which the first identification medium 50 is incorporated in a belt adjuster 24. In this case as well, the first identification medium may be attached to the belt adjuster 24 with an appropriate attaching means such as adhesion instead of being incorporated in the belt adjuster 24. If the belt adjuster 24 and the belt 23 are handled as one article, it is permissible to attach a tag equipped with the second identification medium to the belt or the like. Consequently, commodity distribution control on the belt and true-false decision on the belt and the buckle can be executed.

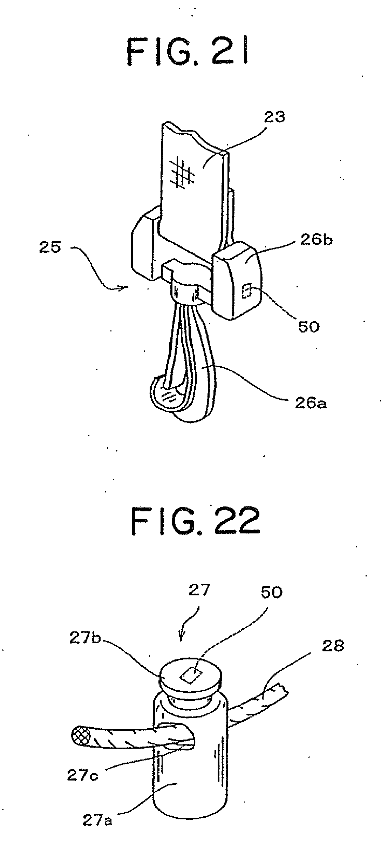

FIG. 21 shows an example in which the first identification medium 50 is incorporated in a swivel hook 25. The first identification medium 50 is incorporated in a main body 26b of the swivel hook 25. It may be incorporated in a hook 26a or the belt 23 instead of being incorporated in the main body 26b. If the swivel hook 25 and the belt 23 are handled as one article, a tag equipped with the second identification medium may be attached to the belt 23 or the like. As a consequence, commodity distribution control on the belt 23 and the true-false decision on the belt 23 and the swivel hook 25 can be carried out.

FIG. 22 shows an example of a cord stopper 27 equipped with the first identification medium 50. The first identification medium 50 is incorporated in a sliding body 27b of the cord stopper 27. The first identification medium 50 may be incorporated in a main body 27a or disposed in a cord 28 instead of being incorporated in the sliding body 27b. When the cord stopper 27 and the cord 28 are handled as one article, a tag equipped with the second identification medium may be attached to the cord 28 or the like. As a consequence, commodity distribution control on the cord with the cord stopper and true-false decision on the cord and the cord stopper can be carried out.

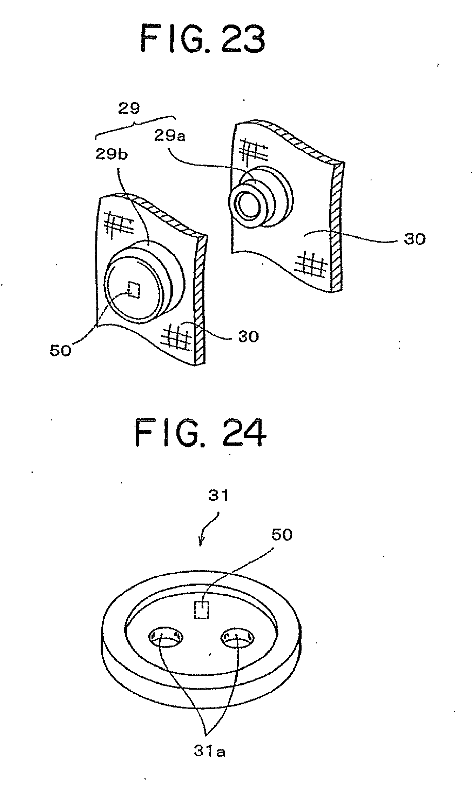

FIG. 23 shows an example in which the first identification medium 50 is incorporated in a snap button 29. The first identification medium 50 is incorporated in a female member 29b. The first identification medium 50 may be incorporated in a male member 29a or disposed on a fabric 30 on which the snap button 29 is to be attached instead of being incorporated in the female member 29b.

FIG. 24 shows an example in which the first identification medium 50 is incorporated in a button 31. The first identification medium 50 is incorporated in the button 31. The first identification medium 50 may be attached to an outer peripheral face of the button 31 with appropriate means such as adhesion instead of being incorporated in the button 31.

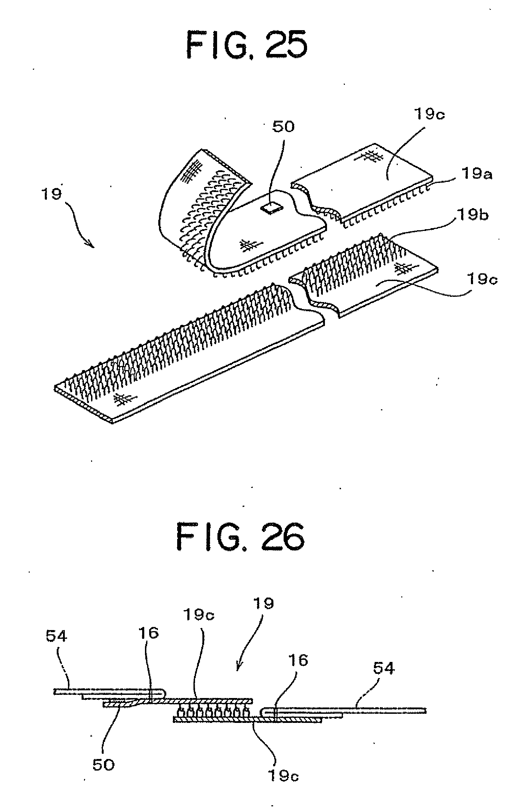

FIG. 25 shows an example in which the first identification medium 50 is disposed on a surface fastener 19. The first identification medium 50 is attached to a base material 19c of the surface fastener 19 with an appropriate attaching means such as adhesion. When the base material 19c is mounted on the article 54, it is preferable to dispose the first identification medium 50 at a portion of the base material 19c to be covered with the article 54 as shown in FIG. 26 showing a lateral cross section of the slide fastener 19 in FIG. 25 because installation of the first identification medium 50 cannot be recognized by a third person.

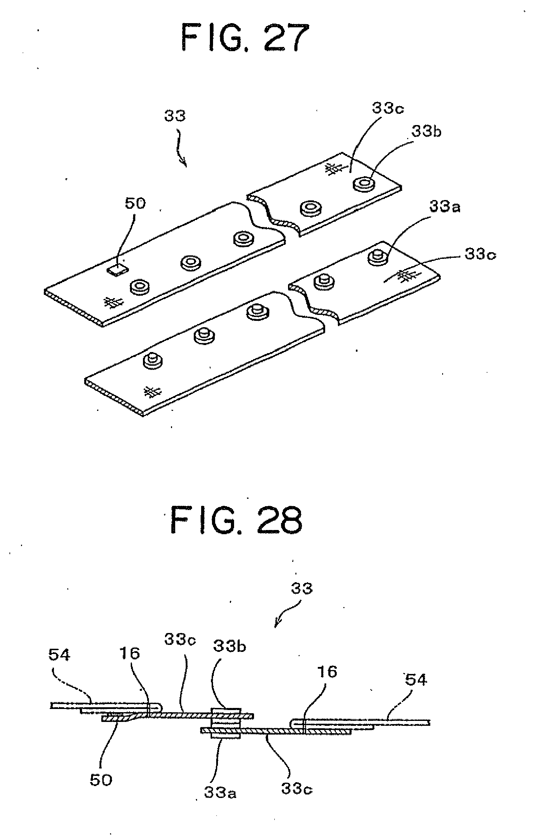

FIG. 27 shows an example in which the first identification medium 50 is disposed in a snap fastener 33. The first identification medium 50 is attached to a base material 33c of the snap fastener 33 with appropriate means such as adhesion. When the base material 33c is mounted on the article 54, it is preferable to dispose the first identification medium 50 at a portion of the base material 33c to be covered with the article 54 as shown in FIG. 28 showing a lateral cross section of the snap fastener 33 in FIG. 27 because installation of the first identification medium 50 cannot be recognized by a third person.

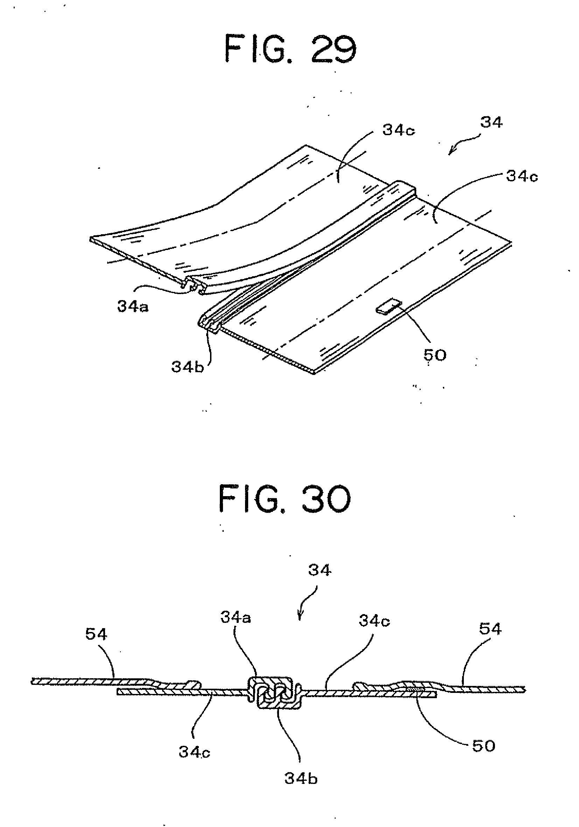

FIG. 29 shows an example in which the first identification medium 50 is disposed in a rail fastener 34 which allows an engaging portion 34a and an engaged portion 34b to be engaged with each other. The first identification medium 50 is attached to a fastener tape 34c of the rail fastener 34 with appropriate means such as adhesion. When the fastener tape 34c is mounted on the article 54, it is preferable to dispose the first identification medium 50 at a portion of the fastener tape 34c to be covered with the article 54 as shown in FIG. 30 showing a cross lateral section of the rail fastener 34 in FIG. 29 because installation of the first identification medium 50 cannot be recognized by a third person.

As described above, explanations have been given with regard to the examples in which the first identification medium is disposed on a fastening product or an article equipped with the fastening product and true-false decision on the fastening product and the article equipped with the fastening product is carried out while the second identification medium is attached removably to the article. The examples described above are described to explain the present invention, and the present invention is not restricted to the above-described examples but may be modified in various ways within a scope of technical idea of the present invention.

When the short-range communication RFID and the long-range communication RFID are respectively used RFID as the first identification medium and the second identification medium, data stored in the first identification medium can be exchanged with an external reading unit through the second identification medium by providing a configuration capable of transmitting and receiving a signal between the short-range communication RFID and the long-range communication RFID.

Although in the above description, the example in which the short-range communication RFID is used as the first identification medium has been explained, the first identification medium is not restricted to the short-range communication RFID but it is permissible to use the above-mentioned identification medium for short-range recognition. The identification medium for short-range recognition may be formed in a fastening product in an appropriate fashion and formed in an article in an appropriate fashion.

### [Second embodiment]

According to the second embodiment of the present invention, an antenna for long-range communication is used instead of the second identification medium of the first embodiment, and the antenna is removably connected to the first identification medium. The first identification medium connected to the antenna is used as an identification medium for long-range communication, and the first identification medium is used as an identification medium for short-range communication by removing the antenna. Thus, description of a same configuration as that described in the first embodiment is omitted while same reference numerals as those used in the first embodiment are used.

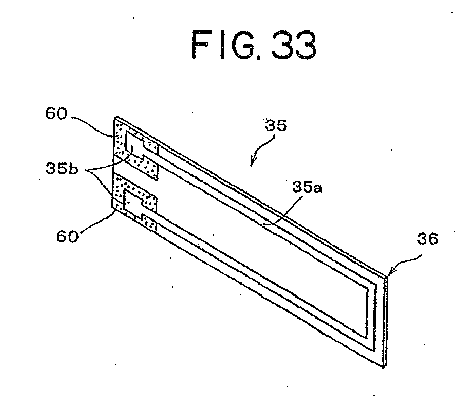

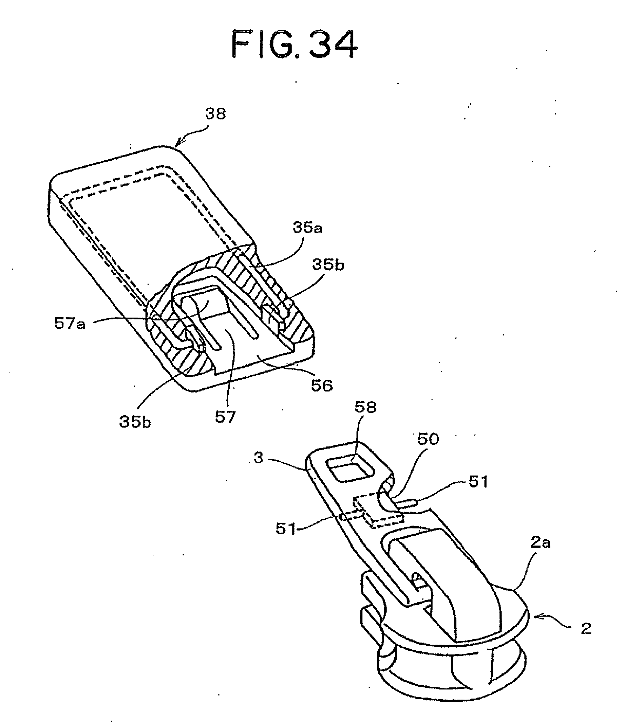

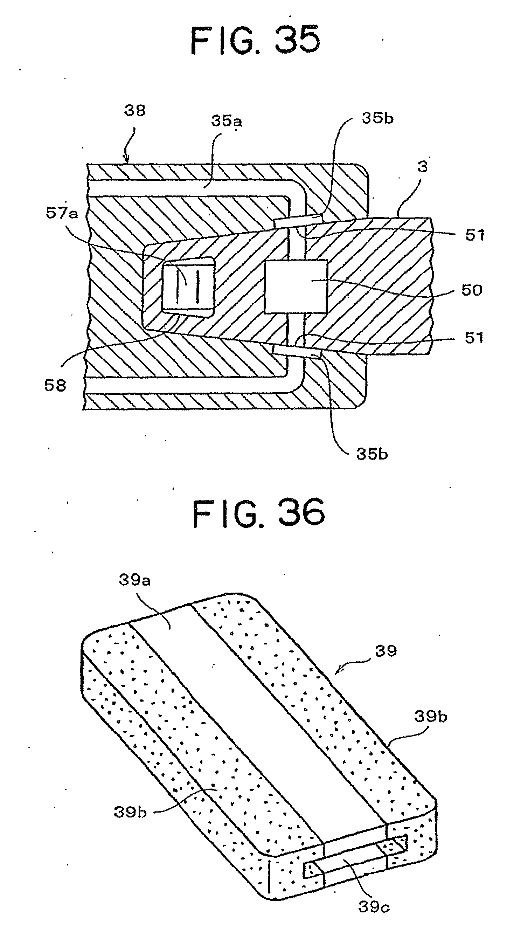

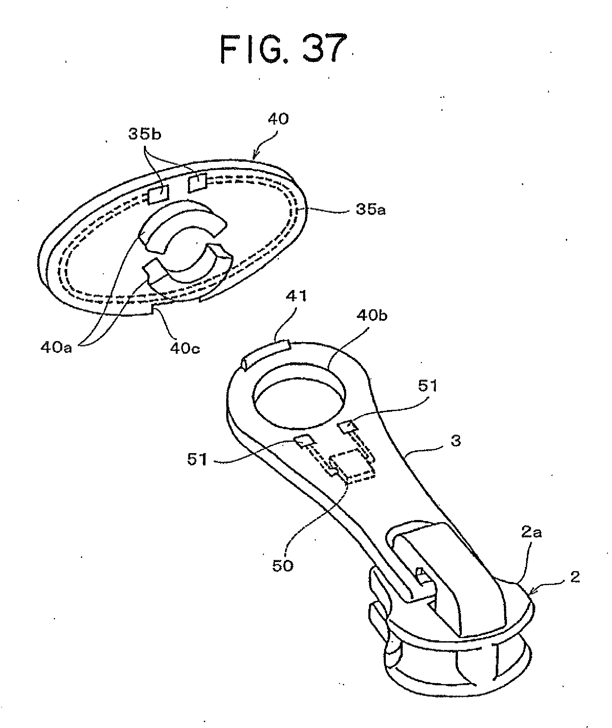

FIG. 31 shows an example in which a long-range communication antenna is formed on a film and the film is removably connected to the short-range communication RFID which is the first identification medium. FIG. 32 shows a lateral cross sectional view of FIG. 31, and FIG. 33 shows a modification of connecting the film to the short-range communication RFID. FIG. 34 is a perspective view showing a configuration of an antenna which can be removably attached to the pull tab of the slide fastener, and FIG. 35 shows a lateral cross sectional view of FIG. 34. FIG. 36 shows a modification of an antenna which can be attached to the pull tab of the slide fastener. FIG. 37 shows another modification of the antenna which can be attached to the pull tab of the slide fastener.

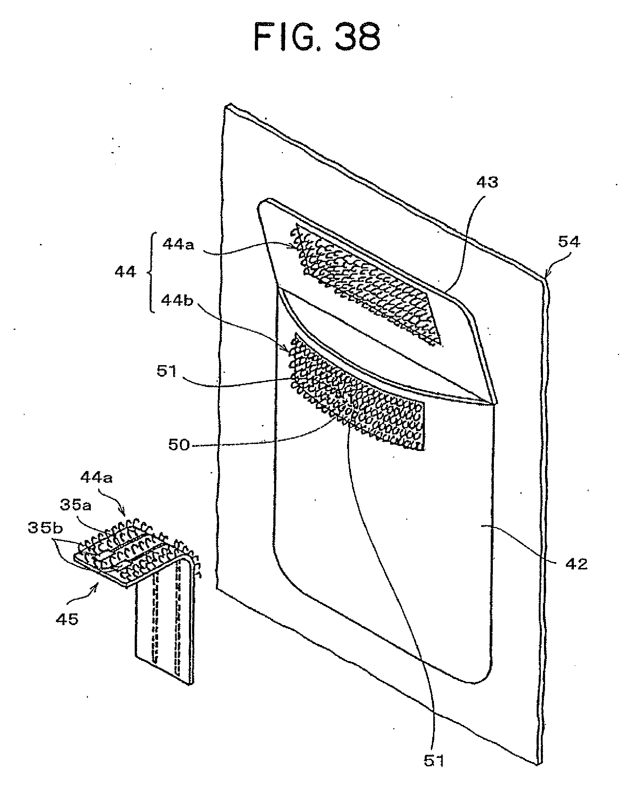

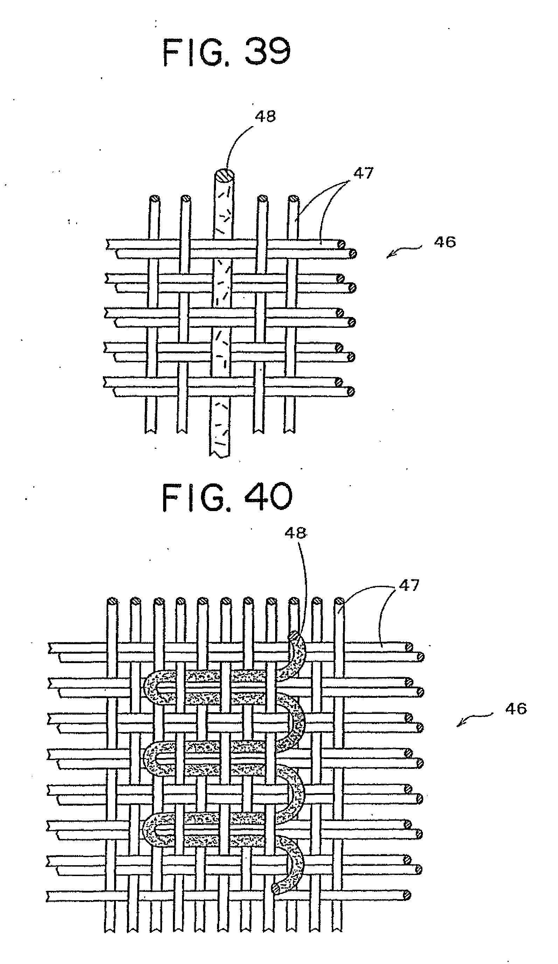

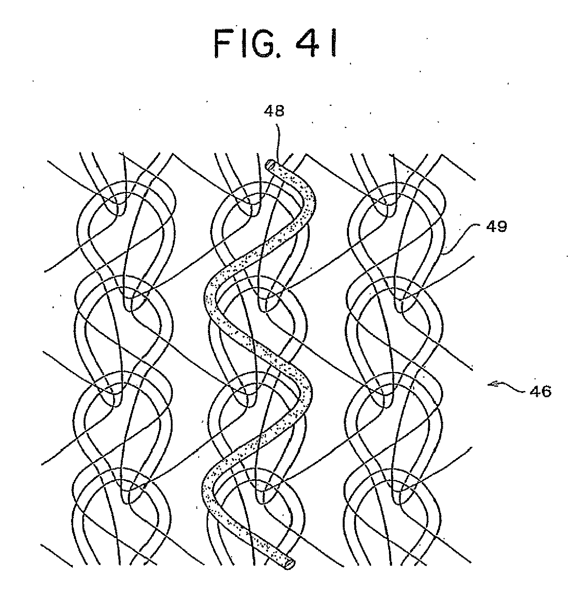

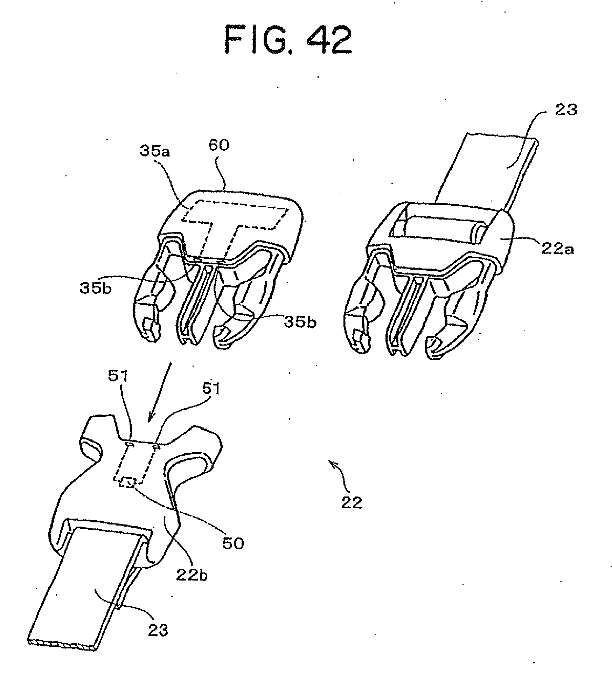

FIG. 38 shows a connection configuration of a long-range communication antenna in case where the first identification medium is disposed in a pocket of an article, and FIGS. 39 to 41 show examples in which an antenna line is disposed in part of weaving yarns or knitting yarns of a woven or knitted fastener tape. FIG. 42 shows an example of connecting the long-range communication antenna in a buckle incorporating the first identification medium.

As shown in FIG. 31, an antenna line 35a is formed on a film 36 with appropriate means, for example, printing using conductive paint, and contact points 35b are formed on both ends of the antenna line 35a. An adhesive portion 37 is formed on an end portion of the film 36 excluding the contact points 35b. Magnetic members 60 may be formed as shown in FIG. 33 instead of the adhesive portion 37. In the meantime, the magnetic members 60 need to be formed such that no electricity conducts between the contact points 35b, 35b on right and left sides.

Referring to FIG. 31, antenna connecting terminals 51, 51 for long-range communication are extended from the short-range communication RFID which is the first identification medium 50 incorporated in the top stop 5 such that the antenna connecting terminals 51, 51 are exposed on a surface of the top stop 5. As shown in FIG. 32, the contact points 35b, 35b of the antenna line 35a are connected to the antenna connecting terminals 51, 51 by bonding the adhesive portion 37 of the film 36 on a top face of the top stop 5. As a consequence, the first identification medium 50 may be used as the long-range communication RFID. Then, the first identification medium 50 may be used as a short-range communication RFID by peeling off the film 36 from the top stop 5.

When the film 36 in which the magnetic members 60 shown in FIG. 33 are disposed at end portions is used, exposed areas of the antenna connecting terminals 51, 51 are enlarged, whereby the antenna connecting terminals 51, 51 and the contact points 35b, 35b can be connected to each other by fixing them with a magnetic force acting between the exposed areas of the antenna connecting terminals 51, 51 and the magnetic members 60, 60. Then, the first identification medium 50 may be used as the short-range communication RFID by peeling off the film 36 form the top stop 5 while resisting the magnetic force.

When the long-range communication antenna shown in FIGS. 31 to 33 is formed on the film, the short-range communication RFID can be used as the long-range communication RFID by connecting the antenna formed on the film to the short-range communication RFID. As a consequence, commodity distribution control data can be transmitted and received over a long distance in usage in commodity distribution control field or the like. It can be used as a short-range communication RFID by peeling off the film constituting the antenna from the short-range communication RFID.

Moreover, the short-range communication RFID is kept loaded on a fastening product, and thus, it can be used for true-false decision on the fastening product or an article equipped with the fastening product. In the meantime, although the example in which the short-range communication RFID is disposed on the top stop has been explained above, a portion in which the short-range communication RFID is to be disposed is not restricted to the top stop, but it may be disposed at a portion which constitutes the slide fastener.

Further, the long-range communication antenna formed on the film is not restricted to being connected to the slide fastener, but the long-range communication antenna may be connected to each fastening product equipped with the short-range communication RFID as shown in FIGS. 19 to 30 in the first embodiment.

FIGS. 34 to 36 show examples of removably connecting the long-range communication antenna to the short-range communication RFID disposed at the pull tab of the slide fastener. In this case also, the short-range communication RFID may be used as the long-range communication RFID by connecting the long-range communication antenna in the same manner as in the case of forming the long-range communication antenna on the film as mentioned above. In addition, the short-range communication RFID may be used as a RFID capable of short-range communication by removing the long-range communication antenna.

FIG. 34 shows an example of mounting a cover 38 equipped with the long-range communication antenna on the pull tab 3 of the slider 2. The pull tab 3 of the slider 2 incorporates a short-range communication RFID as the first identification medium 50, and the antenna connecting terminals 51, 51 of the RFID are exposed on part of an outer surface of the pull tab 3.

An insertion port 56 in which the pull tab 3 is to be inserted is formed in the cover 38, and an elastically deformable engaging piece 57 is formed within the insertion port 56 such that an engaging projection 57a is formed at an end portion thereof. End portions of the antenna line 35a disposed in the cover 38 are formed such that they are exposed within the insertion port 56 as the contact points 35b, 35b. As shown in FIG. 35, when the pull tab 3 is inserted into the insertion port 56, the antenna connecting terminals 51, 51 of the short-range communication RFID as the first identification medium 50 are connected to the contact points 35b, 35b, and the engaging projection 57a engages a hole 58 in the pull tab 3, so that the cover 38 is installed on the pull tab 3.

As a consequence, the short-range communication RFID as the first identification medium 50 can be used as the long-range communication RFID. Further, the short-range communication RFID as the first identification medium 50 can be used for short-range communication by pulling the cover 38 out of the pull tab 3 while resisting an elastic force of engaging piece 57.

FIG. 36 shows a modification of the cover to be inserted into the pull tab 3 shown in FIG. 34. In the example shown in FIG. 36, a main body 39a of a cover 39 is formed of insulating synthetic resin or the like, and antennas 39b are formed of conductive synthetic resin or the like on both sides of the main body 39a. Further, an insertion port 39c in which the pull tab 3 can be inserted is formed between the main body 39a and the antennas 39b.

The antennas 39b can be connected to the antenna connecting terminals 51, 51 of the short-range communication RFID as the first identification medium 50 disposed in the pull tab 3 by inserting the cover 39 into the pull tab 3 as shown in FIG. 34. Consequently, the short-range communication RFID as the first identification medium 50 can be used as a long-range communication RFIF. The first identification medium 50 can be used as the short-range communication RFID by removing the cover 39 from the pull tab 3.

FIG. 37 shows an example in which the antenna line 35a is disposed in an accessory member 40 provided with an engaging projection 40a which engages an engaging hole 40b in the pull tab 3. A fitting groove portion 40c is formed in the accessory member 40 and a fitting projection 41 which is fitted to the fitting groove portion 40c is formed in the pull tab 3 so as to connect the contact points 35b of the antenna line 35a to the antenna connecting terminals 51, 51 of the short-range communication RFID as the first identification medium 50 disposed in the pull tab 3.

The contact points 35b, 35b of the antenna line 35a can be respectively connected to the antenna connecting terminals 51, 51 of the short-range communication RFID as the first identification medium 50 disposed in the pull tab 3 by engaging the accessory member 40 with the pull tab 3. Consequently, the short-range communication RFID as the first identification medium 50 can be used as the long-range communication RFID. Further, the first identification medium 50 can be used as the short-range communication RFID by removing the accessory member 40 from the pull tab 3.

Shapes of the cover equipped with the antenna shown in FIGS. 34 and 36 and the accessory member 40 shown in FIG. 37 are exemplifications and may be changed to other shapes. The long-range communication antenna can be reused by attaching the cover 38, 39 or the accessory member 40 to another pull tab after removing from the pull tab 3, thereby achieving effective use of resource.

FIG. 38 shows an example in which a surface fastener 44 equipped with the short-range communication RFID as the first identification medium 50 is used for opening/closing a flap 43 of a pocket 42. Another surface fastener tape 45 equipped with the antenna line 35a and the contact points 35b, 35b is engaged with the surface fastener 44 equipped with the short-range communication RFID as the first identification medium 50, whereby the contact points 35b, 35bof the antenna line 35a can be connected to the antenna connecting terminals 51, 51 of the short-range communication RFID as the first identification medium 50.

Consequently, the short-range communication RFID as the first identification medium 50 can be used as the long-range communication RFID. Further, the first identification medium 50 can be used as the short-range communication RFID by removing the surface fastener tape 45.

Although FIGS. 36 and 38 show examples of using two antennas as the antenna, it is permissible to use a loop-like antenna obtained by connecting end portions of two antennas instead of using the two antennas as the antenna.

FIGS. 39 to 41 show examples in which an antenna line is disposed in part of weaving yarns or knitting yarns of a woven or knitted fastener tape. An antenna line 48 may be woven or knitted as a weaving yarn or a knitting yarn of conductive fiber at a same time when a base fabric of a fastener tape 46 is woven or knitted as shown in FIGS. 39 to 41. It is also permissible to use a conductive material constituted of a metal line, a metal thin plate or conductive resin instead of conductive fibers. FIGS. 39 to 41 show a weaving pattern or knitting pattern in enlargement to indicate it in a way easy to understand.

The short-range communication RFID as the first identification medium may be used as the long-range communication RFID or the short-range communication RFID by connecting or disconnecting the antenna line 48 to/from an unshown antenna connecting terminal of the first identification medium. As for the connecting/disconnection mode between the antenna line 48 and the antenna connecting terminal of the first identification medium, it is permissible to use the antenna line by connecting to the short-range communication RFID as the first identification medium, and then use it as the short-range communication RFID by disconnecting the antenna line when the long-range communication is not needed.

The antenna line 48 can be disconnected from the antenna connecting terminal of the first identification medium by separating the contact point of the antenna line from the antenna connecting terminal of the first identification medium in a connecting state. The antenna line 48 can be also disposed by weaving or knitting in a fabric or the like constituting an article equipped with a fastening product as well as disposed in the base fabric of the fastener tape. Alternatively, the antenna line may be disposed on the fastener tape or article with an appropriate attaching means, for example, adhesion by using a conductive material composed of a metal line, a metal thin plate, conductive resin or the like.

As an arrangement configuration of the antenna line, an appropriate arrangement may be used depending on a usage condition of the fastening product or article using the antenna line.

FIG. 42 shows an example in which the antenna line 35a is disposed in a dummy male member 60. A shape of the buckle 22 will be described by using the buckle 22 described in FIG. 19. Description of the members of the buckle 22 used in FIG. 19 is omitted by using the same reference numerals as used in FIG. 19.

The short-range communication RFID as the first identification medium 50 disposed in the female member 22 includes the antenna connecting terminals 51, 51. The dummy male member 60 has an identical shape to the male member 22a, and the antenna line 35a for long distance communication and end portions of the antenna line 25a are exposed internally as the contact points 35b, 35b. The contact points 35b, 35b of the antenna line 35a can be respectively connected to the antenna connecting lines 51, 51 of the short-range communication RFID as the first identification medium 50 by engaging the dummy male member 60 with the female member 22b.

The short-range communication RFID as the first identification medium 50 can be used as the long-range communication RFID by engaging the dummy male member 60 with the female member 22b. The short-range communication RFID as the first identification medium can be used as the short-range communication RFID by removing the dummy male member 60 from the female member 22b.

When use as the long-range communication ends, another buckle may be equipped with long-distance communication capability by removing the dummy male member 60 from the female member 22b and engaging it with the buckle having the short-range communication RFID as the first identification medium 50. Consequently, the dummy male member 60 may be reused.

According to the second embodiment, the RFIDF equipped with no battery can be provided with the battery so as to extend a communication range for long-range communication by connecting the battery to the short-range communication RFID as the first identification medium 50 like a removable antenna.

## Claims

1. An article (54) having an identification medium (50) for short-range communication wherein a RFID of the identification medium (50) has an antenna connecting terminal (51), being **characterised in that**
the identification medium (50) is disposed in a fastening product (1, 22, 44) to be attached to the article (54) as a RFID for short-range communication and
an antenna (35a, 35b, 48) for long-range communication is removably connected to the antenna connecting terminal (51),
wherein the identification medium (50) is used as an identification medium for commodity distribution control with respect to the article (54) when the antenna (35a, 35b, 48) for long-range communication is connected to the antenna connecting terminal (51) and the identification medium (50) is used as an identification medium for true-false decision with respect to the article (54) when the antenna (35a, 35b, 48) for long-range communication is not connected to the antenna connecting terminal (51).

2. The article according to claim 1, being **characterised in that** the antenna connecting terminal (51) is arranged at a portion of the article (54) to which the antenna for long-range communication (35a, 35b, 48) is romovably attached.

3. The article according to claim 1, being **characterised in that** a battery is removably connected to the short-range communication RFID.

4. A true-false decision and commodity distribution control method for an article (54) wherein the article (54) has a short-range communication RFID as an identification medium (50) and an antenna connecting terminal (51) is disposed at the short-range communication RFID, being **characterized in that**
the identification medium (50) is disposed in a fastening product (1, 22, 44) to be attached to the article (54) as an identification medium for true-false decision with respect to the article (54) and
an antenna (35a, 35b, 48) for long-range communication is removably connected to the antenna connecting terminal (51),
wherein the identification medium (50) is used as an identification medium for commodity distribution control with respect to the article (54) when the antenna (35a, 35b, 48) for long-range communication is connected to the antenna connecting terminal (51) and the identification medium (50) is used as an identification medium for true-false decision with respect to the article (54) when the antenna (35a, 35b, 48) for long-range communication is not connected to the antenna connecting terminal (51), and
wherein commodity distribution control on the article (54) is carried out based on data directly or indirectly read from a memory of the identification medium (50) and/or data written into the memory through long-range communication via the antenna (35a, 35b, 48) for long-range communication connected to the antenna connecting terminal (51).

5. The true-false decision and commodity distribution control method according to claim 4, being **characterised in that** true-false decision on the article (54) is carried out by comparing data directly or indirectly read from a memory of the identification medium (50) through short-range communication with preliminarily set reference data after the antenna (35a, 35b, 48) for long-range communication is removed from the antenna connecting terminal (51).

6. The true-false decision and commodity distribution control method according to claim4 or 5, being **characterised in that** after the antenna (35a, 35b, 48) for long-range communication is removed from the antenna connecting terminal (51), the removed antenna (35a, 35b, 48) is used as an antenna (35a, 35b, 48) for long-range communication for another new article.
